# EUROPEAN PATENT SPECIFICATION

(11) **EP 3 007 889 B1**
(45) Date of publication and mention of the grant of the patent: **28.11.2018**
(21) Application number: 14728953.2
(22) Date of filing: 06.06.2014
(51) Int. Cl.: B29D 30/06

(54) **METHOD OF MOULDING A TIRE TREAD USING AN ELEMENT COMPRISING CUTTING MEANS**
VERFAHREN ZUM FORMEN EINER REIFENLAUFFLÄCHE UNTER VERWENDUNG EINES MIT SCHNEIDEMITTELN VERSEHENEN FORMTEILS
PROCÉDÉ DE MOULAGE D'UNE BANDE DE ROULEMENT DE PNEU UTILISANT UN ÉLÉMENT DE MOULAGE COMPRENANT DES MOYENS DE DÉCOUPE

(30) Priority: 14.06.2013 EP 13172034
(43) Date of publication of application: 20.04.2016
(73) Proprietor: Compagnie Générale des Etablissements Michelin, 63000 Clermont-Ferrand (FR)
(72) Inventor: KANEKO, Shuichi, Tokyo 163-1073 (JP)
(74) Representative: Regimbeau
(86) International application number: PCT/EP2014/061798
(87) International publication number: WO 2014/198651

(56) References cited:
- WO-A1-2006/069912
- GB-A- 1 124 915
- US-A- 3 432 888
- US-A- 4 553 918

## Description

### FIELD OF THE INVENTION

The present invention relates to the field of moulds for moulding and vulcanizing a tyre tread. More specifically, the invention relates to the moulds used for moulding in the tread grooves which are partially or completely covered by an additional cover layer.

### PRIOR ART

It is known practice to design tyres the tread of which comprises various rubber compounds. Document WO 03089257 discloses such treads. More specifically, document WO 03089257 discloses a tread comprising grooves the walls of which are covered with a cover layer. The material of which this cover layer is made differs from the rubber compound of which the tread is made. This material notably has much better wet grip than the wet grip of the rubber compound. This allows a very significant improvement in cornering performance on wet ground.

Document GB 1124915 - A discloses the moulding of tread grooves covered with an additional cover layer, wherein the cover layer is pushed in the grooves by the ribs and by groove forming portions of the curing mould; no cutting step of the cover layer by cutting means is disclosed herein.

One way of manufacturing this tread is notably disclosed in document WO 2006069912. According to this method of manufacture, in a first step, provision is made for the material intended to constitute a cover layer to be injected in the form of one or more inserts into the green tyre using an injection nozzle. The insert or inserts is or are then shaped, in a second step, by ribs of a vulcanizing mould so that they cover all or part of the walls of the grooves moulded by these ribs.

This method of manufacture has its limits, particularly as far as obtaining precision mouldings is concerned. Specifically, during the shaping thereof, the insert experiences a significant shear force from the rib in order to convert this insert into a layer of lesser thickness. This shear force may cause cracking within the insert, making it more difficult to control the movements of the material of which this insert is made. The shape and the thickness of the cover layer thus formed may therefore be somewhat haphazard. The advantages afforded by the additional layer to the performance of the tyre are then reduced.

In addition, in this method of manufacture, it is necessary to make the inserts align with the ribs. This makes manufacture of the tread more complicated.

There is therefore a need to improve the incorporation of a cover layer on the walls of grooves of a tyre tread.

### DEFINITIONS

A "tyre" means all types of elastic tyre whether or not subjected to an internal pressure.

A "green tyre" or "green form" of a tyre means a superposition of a plurality of semi-finished rubber products present in the form of strips or sheets, with or without reinforcement. The green tyre is intended to be vulcanized in a mould in order to obtain the tyre.

The "tread" of a tyre means a quantity of rubber material bounded by lateral surfaces and by two main surfaces one of which is intended to come into contact with a road surface when the tyre is running.

A "tread surface" means the surface formed by those points on the tyre tread that come into contact with the road surface when the tyre is running.

A "mould" means a collection of separate moulding elements which, when brought closer towards one another, delimit a toroidal moulding space.

A "moulding element" of a mould means part of a mould. A moulding element is, for example, a mould segment.

A "moulding surface" of a moulding element means the surface of the mould that is intended to mould the surface of the tyre tread.

A "blade" of a moulding element means a protrusion projecting from the moulding surface. In the blades category, a distinction is made between sipe blades which are less than 2 mm wide and ribs which have a width of 2 mm or more. Sipe blades are intended to mould sipes in the tyre tread, which means cuts which at least partially close up when they fall within the contact patch where the tyre makes contact with the ground. The ribs are intended to mould grooves in the tread, which means cuts which do not close up when they fall within the contact patch in which the tyre makes contact with the ground.

A "blade with a rounded end" means that the end of the blade is domed.

The "height of the blade means the distance between the moulding surface of the mould and the end of the blade.

An "acute angle" means an angle less than or equal to 90°.

### SUMMARY OF THE INVENTION

The invention relates to a method of manufacturing a tyre tread. This tread comprises a plurality of raised elements, each raised element comprising a contact face intended to come into contact with a ground when the tyre is rolling along and lateral faces connected to this contact face. The method of manufacturing as defined in claim 1, comprises a step of preparing a green form of the tyre, a step of laying a cover layer over all or part of an external surface of the green tyre, a step of laying the green tyre in a mould, with the mould comprising a blade, a step of using this blade to mould a lateral face of a raised element, a step of vulcanizing the green tyre in order to obtain the tyre. The method of manufacturing further comprises a step of straining the cover layer by the blade, a step of cutting the cover layer using cutting means belonging to the mould, a step whereby the blade drives a cut part of the cover layer into the green tyre so that the lateral face of the raised element is partially or fully covered by this cut part.

In an alternative form of the embodiment as defined in claim 2, the cover layer is extendable and the coefficient of extension of this cover layer is comprised between 10% and 80%.

With the mould, the distance between the blade and respectively each cutting means can be lower than the height H of this blade. In this case, the lateral faces of the raised element molded by the blade are partially covered by the cover layer. By using an extendable cover layer, it is possible to enlarge this cover layer during the step where the cover layer is strained by the blade. Thus, the lateral faces of the raised element are more covered or totally covered by the cover layer. Consequently, the performances of the tyre are increased.

In an alternative form of the embodiment as defined in claim 3, the cover layer comprises an elastomeric material and a collection of woven or nonwoven fibers, these fibers being impregnated with this elastomeric material.

By using fibers in the the cover layer, the mechanical integrity of this layer is enhanced, making it easier to cut. Further, the presence of a collection of fibers in the cover layer makes it possible, because of the intrinsic rigidity of these fibers, to limit the extensibility of the cover layer as it is being cut, making it easier to apply to the green tyre. Finally, impregnating the fibers with the elastomeric material provides the whole with excellent cohesion. The cover layer thus behaves as an entity when it is being cut and applied to the green tyre. The fibers may be impregnated by hot calendering, moulding in a press or injection moulding under pressure.

### BRIEF DESCRIPTION OF THE DRAWINGS

Other features and advantages of the invention will emerge from the following description, given by way of non-limiting example, with reference to the attached drawings in which:
- **Figure 1** is a sectional drawing depicting schematically a moulding element according to the invention;
- **Figure 2** illustrates the different steps of a method of manufacturing a tyre tread according to the invention;
- **Figure 3** illustrates a step of the method of manufacturing of **Fig.2**, in which a cover layer is strained by a blade;
- **Figure 4** illustrates a step of the method of manufacturing of **Fig.2**, in which the cover layer is cut by cutting means;
- **Figure 5** illustrates a step of the method of manufacturing of **Fig.2**, in which the blade drives a cut part of the cover layer into the green tyre;
- **Figure 6** is a sectional drawing depicting schematically a tyre tread with a raised element partially covered by a cover layer.

In the description that follows, elements that are substantially identical or similar will be denoted by identical references.

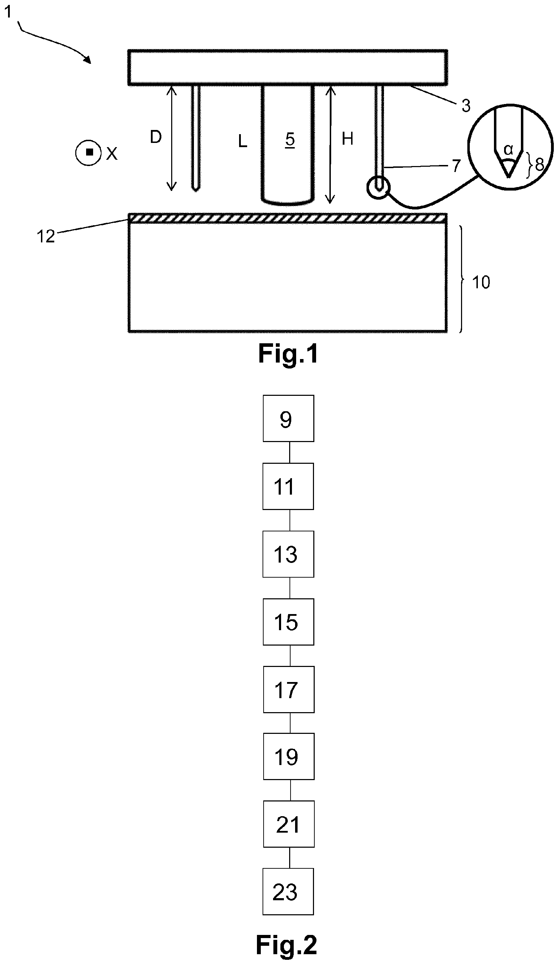

**Figure 1** depicts a moulding element 1 for implementing a method of manufacture according to the invention.

More specifically, the moulding element 1 comprises a moulding surface 3 intended to mould part of the tread surface of a tyre. The moulding element 1 also comprises blades 5 of which just one is depicted here to make the invention easier to understand. The blade in this instance is a rib 5 intended to mould a groove in the tyre tread. A "groove" in a tread means a cut in this tread of a width, i.e. the distance separating two lateral walls of this groove, greater than 2 mm. The rib 5 extends heightwise and projects from this moulding surface 3 with an height H. The rib 5 also extends lengthwise in a direction of extension X. In the mould, this direction may be a circumferential direction following the circumference of the mould. As an alternative, the direction of extension is a transverse direction perpendicular to the circumferential direction of the mould. In another alternative form, this direction of extension is an oblique direction making a non-zero angle with the circumferential direction and with the transverse direction of the mould.

The moulding element 1 of **Figure 1** also has two cutting means 7 arranged either side of the rib 5. These cutting means extend lengthwise in a direction parallel to the direction of extension X of the rib 5. A "parallel direction" means that the direction of extension of the cutting means makes an angle of between -5° and +5° with the direction of extension X of the rib.

Each cutting means 7 comprises a cutting edge 8 extending in the direction of extension X. This cutting edge makes an acute angle α in a sectional drawing perpendicular to the direction of extension X. The distance D between this cutting edge and the moulding surface 3 is lower than the height H of the rib 5. The cutting edge has, in the plane of **Figure 1**, an angle α less than or equal to 90° (refer to the enlarged detail associated with **Figure 1** which is an enlargement of the end of one of the two cutting means 7). In a preferred embodiment, the angle α is less than or equal to 60°. In another embodiment, the angle α is less than or equal to 35°. In another embodiment, the angle α is less than or equal to 20°.

**Figure 2** illustrates the different steps of a method of manufacturing a tyre tread according to the invention. This method of manufacturing comprises:
- a step (9) of preparing a green form (10) of the tyre;
- a step (11) of laying a cover layer (12) over all or part of an external surface of the green tyre;
- a step (13) of laying the green tyre in a mould;
- with the mould comprising the blade (5), a step (15) of using this blade (5) to mould a lateral face of a raised element;
- a step (17) of vulcanizing the green tyre in order to obtain the tyre.
The method of manufacturing further comprises the following steps:
- a step (19) of straining the cover layer by the blade (5);
- a step (21) of cutting the cover layer using cutting means (7) belonging to the mould;
- a step (23) whereby the blade (5) drives a cut part of the cover layer (12) into the green tyre so that the lateral face of the raised element (25) is partially or fully covered by this cut part.

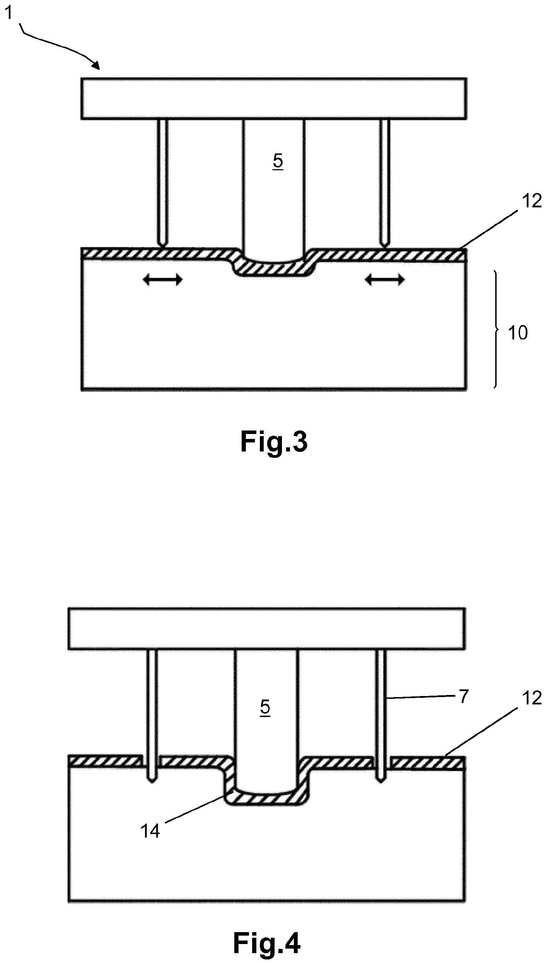

Figures **3** to **6** illustrates in greater detail the various step for implementing the method of manufacture.

**Figure 3** discloses a step in which the cover layer is strained by the blade 5. In this step, the moulding element 1 and the green tyre 10 move closer to one another. This movement is, for example, initiated by a membrane (not depicted) in the mould. Under the action of a quantity of pressurized steam, this membrane swells and pushes the green tyre towards the moulding element 1. In this step, the cover layer 12 is strained by the blade 5. This cover layer 12 is extendable and its coefficient of extension is comprised between 10% to 80%. In a preferred embodiment, the cover layer 12 comprises an elastomeric material and a collection of woven or nonwoven fibers. These fibers are impregnated with this elastomeric material.

**Figure 4** illustrates a step whereby the blade 5 drives part 14 of the cover layer 12 into the green tyre, this cover layer 12 being cut by the cutting means 7.

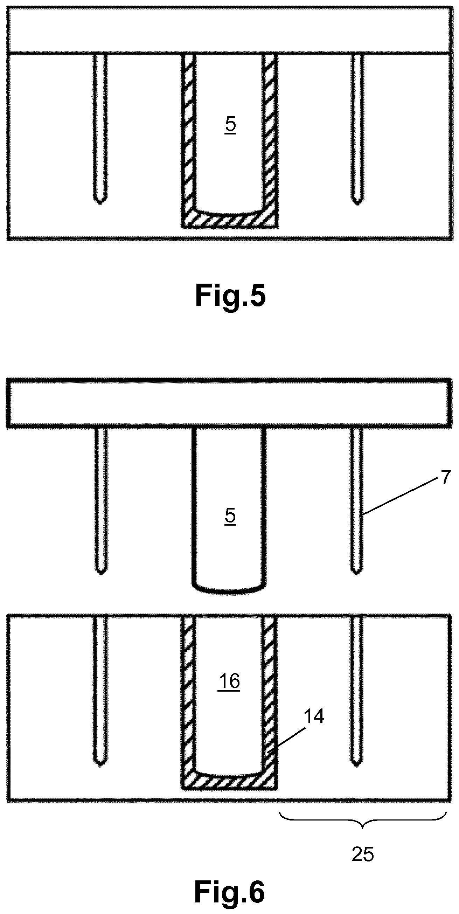

**Figure 5** illustrates an intermediate moulding step in which the rib 5 is pushed into the green tyre over its entire height. The entirety of the cover layer thus finds itself inside the green tyre. Once this step has been performed, it is then possible to vulcanize the green tyre, i.e. to convert the rubber material of which the green tyre is made from the plastic state to the elastic state. This vulcanizing step may also modify the internal structure of the cover layer.

**Figure 6** depicts the result of the various steps of moulding and vulcanizing the green tyre illustrated in **Figures 3** to **5**. The part of the tread thus obtained comprises a groove 16 obtained by moulding rubber around the rib 5 and two sipes 18 obtained by moulding rubber around the two cutting means 7. It will be noted here that all of the walls of the groove, i.e. the lateral walls and the bottom wall flanked by the lateral walls, are covered with the cut part 14 of the cover layer.

The invention is not restricted to the examples described and depicted and various modifications can be made thereto without departing from its scope.

## Claims

1. Method of manufacturing a tyre tread, this tread comprising a plurality of raised elements (25), each raised element comprising a contact face intended to come into contact with a ground when the tyre is rolling along and lateral faces connected to this contact face, the method of manufacturing comprising the following steps:
- a step (9) of preparing a green form (10) of the tyre;
- a step (11) of laying a cover layer (12) over all or part of an external surface of the green tyre;
- a step (13) of laying the green tyre in a mould;
- with the mould comprising a blade (5), a step (15) of using this blade (5) to mould a lateral face of a raised element;
- a step (17) of vulcanizing the green tyre in order to obtain the tyre;
**characterized in that** this method of manufacturing further comprises the following steps:
- a step (19) of straining the cover layer by the blade (5) ;
- a step (21) of cutting the cover layer using cutting means (7) belonging to the mould;
- a step (23) whereby the blade (5) drives a cut part of the cover layer (12) into the green tyre so that the lateral face of the raised element (25) is partially or fully covered by this cut part.

2. Method of manufacturing according to claim 1, in which the cover layer (12) is extendable and the coefficient of extension of this cover layer (12) is comprised between 10% and 80%.

3. Method of manufacturing according to either one of claims 1 to 2, in which the cover layer (12) comprises an elastomeric material and a collection of woven or nonwoven fibers, **characterized in that** these fibers are impregnated with this elastomeric material.

## Patentansprüche

1. Verfahren zur Herstellung einer Reifenlauffläche, wobei diese Lauffläche mehrere erhöhte Elemente (25) umfasst, wobei jedes erhöhte Element eine Kontaktfläche aufweist, die dazu bestimmt ist, mit einem Boden in Kontakt zu kommen, wenn der Reifen abrollt, und seitliche Flächen, die mit dieser Kontaktfläche verbunden sind, wobei das Verfahren zur Herstellung durch folgende Schritte gekennzeichnet ist:
- einen Schritt (9) des Vorbereitens einer Rohform (10) des Reifens;
- einen Schritt (11) des Legens einer Deckschicht (12) über die gesamte oder einen Teil einer äußeren Oberfläche des Reifenrohlings;
- einen Schritt (13) des Legens des Reifenrohlings in eine Form;
- mit der Form, die ein Schneidmesser (5) umfasst, einen Schritt (15) des Verwendens dieses Schneidmessers (5), um eine Seitenfläche eines erhöhten Elements zu formen;
- einen Schritt (17) des Vulkanisierens des Reifenrohlings, um den Reifen zu erlangen;
**dadurch gekennzeichnet, dass** dieses Herstellungsverfahren ferner die folgenden Schritte umfasst:
- einen Schritt (19) des Spannens der Deckschicht durch das Schneidmesser (5);
- einen Schritt (21) des Schneidens der Deckschicht unter Verwendung von Schneidmitteln (7), die zu der Form gehören;
- einen Schritt (23), wobei das Schneidmesser (5) einen geschnittenen Teil der Deckschicht (12) in den Reifenrohling treibt, so dass die Seitenfläche des erhöhten Elements (25) teilweise oder vollständig von diesem geschnittenen Teil bedeckt ist.

2. Verfahren zur Herstellung nach Anspruch 1, bei dem die Deckschicht (12) ausdehnbar ist und der Ausdehnungskoeffizient dieser Deckschicht (12) zwischen 10 % und 80 % liegt.

3. Herstellungsverfahren nach einem der Ansprüche 1 bis 2, bei dem die Deckschicht (12) ein elastomeres Material und eine Ansammlung gewebter oder nichtgewebter Fasern aufweist, **dadurch gekennzeichnet, dass** diese Fasern mit diesem elastomeren Material imprägniert sind.

## Revendications

1. Procédé pour fabriquer une bande de roulement de pneu, cette bande de roulement comprenant une pluralité d'éléments relevés (25), chaque élément relevé comprenant une face de contact prévue pour venir en contact avec le sol lorsque le pneu roule, et des faces latérales raccordées à cette face de contact, le procédé de fabrication comprenant les étapes suivantes :
- une étape (9) pour préparer une forme crue (10) du pneu ;
- une étape (11) pour poser une couche de recouvrement (12) sur tout ou partie d'une surface externe du pneu cru ;
- une étape (13) pour poser le pneu cru dans un moule ;
- avec le moule qui comprend une lame (5), une étape (15) pour utiliser cette lame (5) afin de mouler une face latérale d'un élément relevé ;
- une étape (17) pour vulcaniser le pneu cru afin d'obtenir le pneu ;
**caractérisé en ce que** ce procédé de fabrication comprend en outre les étapes suivantes :
- une étape (19) pour tendre la couche de recouvrement grâce à la lame (5) ;
- une étape (21) pour découper la couche de recouvrement à l'aide de moyens de découpe (7) appartenant au moule ;
- une étape (23) moyennant quoi la lame (5) entraîne une partie découpée de la couche de recouvrement (12) dans le pneu cru de sorte que la face latérale de l'élément relevé (25) est partiellement ou totalement recouverte par cette partie découpée.

2. Procédé de fabrication selon la revendication 1, dans lequel la couche de recouvrement (12) est extensible et le coefficient d'extension de cette couche de recouvrement (12) est compris entre 10 % et 80 %.

3. Procédé de fabrication selon l'une ou l'autre des revendications 1 à 2, dans lequel la couche de recouvrement (12) comprend un matériau élastomère et un ensemble de fibres tissées ou non tissées, **caractérisé en ce que** ces fibres sont imprégnées avec ce matériau élastomère.
